# EUROPEAN PATENT SPECIFICATION

(11) **EP 1 705 815 B1**
(45) Date of publication and mention of the grant of the patent: **24.08.2011**
(21) Application number: 05006295.9
(22) Date of filing: 22.03.2005
(51) Int. Cl.: H04J 3/06, G06F 1/04

(54) **A digital clock switching means**
Digitale Taktumschalteinrichtung
Dispositif numérique de commutation d'horloge

(43) Date of publication of application: 27.09.2006
(73) Proprietor: Infineon Technologies AG, 85579 Neubiberg (DE)
(72) Inventor: Lewis, Michael, 195 52 Märsta (SE)
(74) Representative: Graf Lambsdorff, Matthias

(56) References cited:
- EP-A- 0 591 593
- EP-A- 0 841 834
- US-A- 5 574 753
- US-A1- 2004 164 782
- US-B1- 6 831 959

## Description

### Technical field of the invention

The present invention relates in a first aspect to a digital clock switching means operable to deadlock-free switch the source of the digital clock for an integrated circuit.

In a second aspect, the present invention relates to a method for deadlock-free switching of the source of the digital clock for an integrated circuit.

In a third aspect, the present invention relates to at least one computer program product for deadlock-free switching of the source of the digital clock for an integrated circuit.

### Description of related art

Most digital integrated circuits require a clock signal to synchronize their activity. Often, a circuit will be designed so that the clock signal can come from more than one source. For example, it may either be generated internally on the chip, or be supplied externally. The motivation for such a design is flexibility and reduced power consumption: in some applications, there could already be an externally generated clock available and so to generate another clock on-chip is wasteful of energy. In other applications, no such external clock may be available. Since it is extremely expensive to produce many different variants of an integrated circuit, common practice is to design a chip to meet both requirements.

For this to be possible, there must exist a circuit for changing the source of the digital clock. Such a change-over must be glitch free, i.e. it must be possible to guarantee that the clock seen by the digital system neither has very short pulses, nor very closely spaced clock pulses. Since the internal and external clocks are asynchronous to one another, this change-over needs to be performed with some care. Typically, it is ensured that the first clock signal is paused for a sufficient duration, before the second clock signal is allowed to take over.

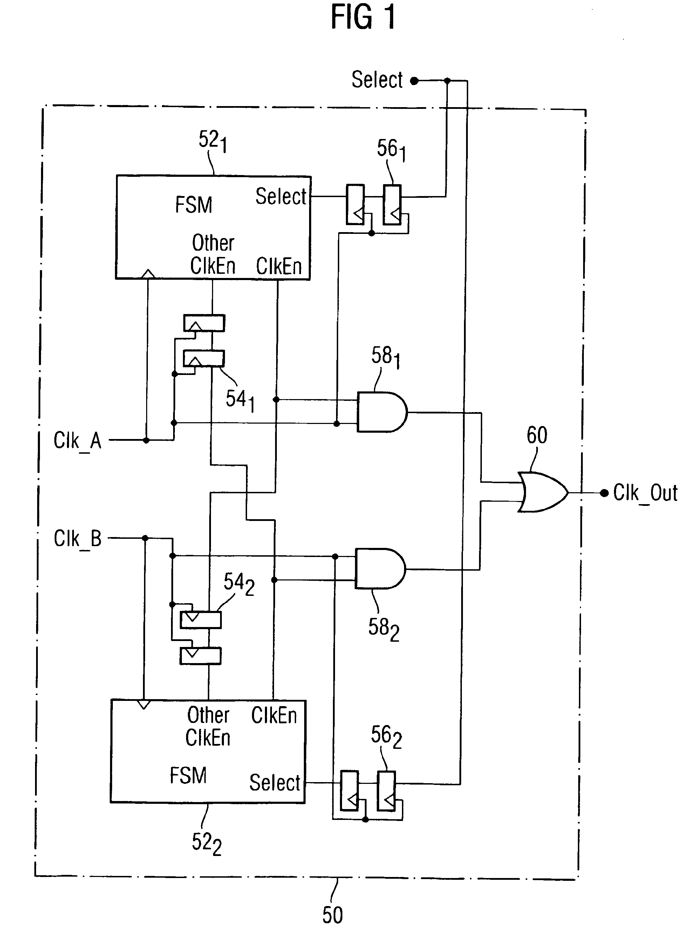

A circuit for performing this function according to the state of the art is shown in Figure 1. The circuit 50 consists of two finite state machines (FSMs) 52₁, 52₂ that are responsible for managing the switch-over. Each FSM 52₁, 52₂ is associated to a clock input, *Clk_A* or *Clk_B.* The FSMs 52₁, 52₂ change their state on the 1->0 transition of the relevant clock input. Each FSM 52₁; 52₂ has an output *ClkEn* which, when set to 1, causes the clock to be passed to the clock output *Clk_Out.* The input signal Select, assumed to be synchronous to *Clk_Out,* specifies which clock should be active. Each FSM 52₁; 52₂ monitors the state of the other clock enable signal via the input *OtherClkEn.* Since the input clocks are assumed to be asynchronous to one another, it is necessary to use a double latch synchroniser 54₁, 54₂ for the input signals which come from other clock domains.

The circuit 50 disclosed in Figure 1 also comprises two second double latch synchronizers 56₁, 56₂ connected to the FSMs 52₁, 52₂ and having the signal (Select) as inputs. The circuit 50 also comprises two AND-gates 58₁, 58₂ connected to the FSMs 52₁, 52₂ and to the clock sources Clk_A, Clk_B. As is apparent from Figure 1, the AND-gates 58₁, 58₂ are also connected to an OR gate 60 which has an output in the form of the clock output, Clk_Out.

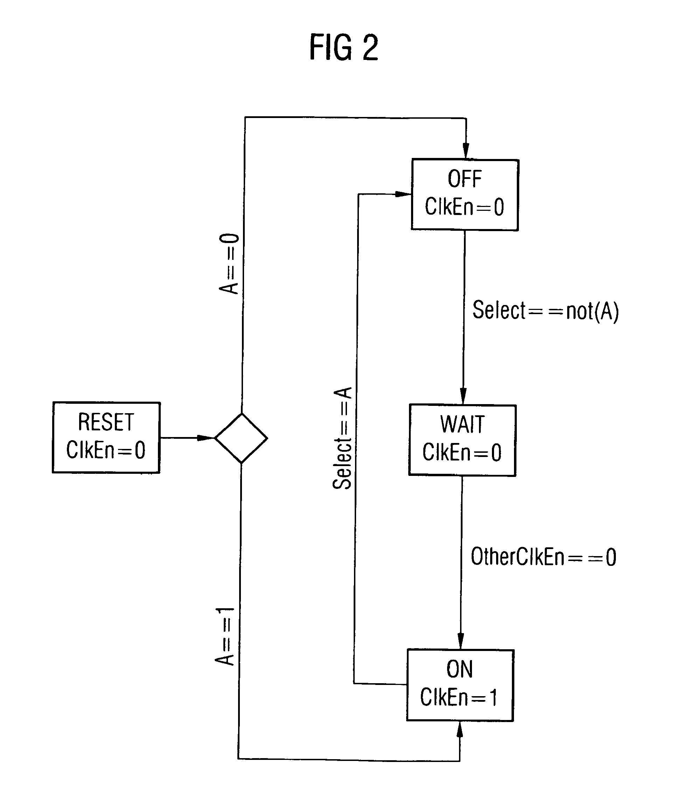

The function of the circuit 50 is best explained via the state diagram for the FSMs 52₁, 52₂, shown in Figure 2. The FSMs 52₁, 52₂ differ only in their reset behaviour and the polarity of the *Select* signal to which they respond. It is assumed that *Clk_A* is to be enabled at reset, and *Select* is zero. The variable *A* in the state diagram is set to '1' for the FSM 52₁ associated with *Clk_A* and set to '0' for the FSM 52₂ associated with *Clk_B.*

At reset, both FSMs 52₁, 52₂ begin in the RESET state. The upper FSM 52₁ (*A*==1) proceeds into the ON state, asserts *ClkEn* and allows *Clk_A* to pass to *Clk_Out*. The lower FSM 52₂ (*A*==0) proceeds into the OFF state.

At some point, the system desires to change its clock source and changes *Select* to '1'. The upper FSM 52₁ observes the change, and proceeds to disable its clock by deasserting *ClkEn.* Since the two FSMs 52₁, 52₂ are not synchronised, it is necessary for the lower FSM 52₂ to ensure that the upper FSM 52₁ has released the clock output. Therefore, on observing the change in *Select*, the lower FSM 52₂ proceeds to the WAIT state. Only when it observes that the upper FSM 52₁ has released the clock output (*OtherClkEn*==0) does it proceed to the ON state and allows the clock to pass.

The problem with the standard clock switch circuit 50 occurs when the clock to be switched to (for instance, *Clk_B*) is not present. This could be due to a misunderstanding about the application circuit, or due to a fabrication error of the integrated circuit. When the system requests to change the clock source, the upper FSM 52₁ will disable the output clock. However, the lower FSM 52₂ has no clock, and will never transition to the ON state. This causes a deadlock, since the system clock will not be restarted and so *Select* can not be changed. Such a deadlock is highly undesirable, as it means that the chip simply ceases to function with no diagnostic information and with no possibility to resume function in the alternative operating mode (using *Clk_A)*

The document US 6,831,959 B1 discloses a method and device for switching between multiple clock signals in a digital circuit. A clock selector is provided with multiple clock signals. A master clock signal is derived from one or more of the multiple clock signals. Upon an indication of a clock switching signal, an active clock signal is blocked at a synchronous gate, until a clock edge of a clock signal to be switched to is detected. If a clock edge of a clock signal to be switched to is not detected within a predetermined period of time, the previous clock signal is switched to active again.

### Summary of the invention

It is an object of the present invention to solve the above-mentioned problems.

According to the present invention, there is provided in a first aspect a digital clock switching means operable to deadlock-free switch the source of the digital clock for an integrated circuit. The digital clock switching means comprises a first finite state machine associated with a first clock source, and a second finite state machine associated with a second clock source. The finite state machines are connected to each other in order to monitor the current state of the other finite state machine. Each finite state machine has an input signal (Select) operable to control which clock source that should be active and passed to a clock output of the digital clock switching means. Each finite state machine comprises a counter means with a variable (Cnt₁; Cnt₂), wherein the counter means associated with the active clock source will get its variable (Cnt₁; Cnt₂) initialized to a constant (Nfail₁, Nfail₂) when said input signal (Select) indicates the switching off of the active clock source, whereby the finite state machine associated with the active clock source enters a CHECK state, wherein the counter means decrements the variable (Cnt₁; Cnt₂) at each clock cycle. If the other finite state machine verifies the presence of its clock source before the variable (Cnt₁; Cnt₂) reaches zero, the switch of the active clock source will be effected. If, on the other hand, the variable (Cnt₁; Cnt₂) decrements to zero, no switch of the active clock source will be effected. The main advantage with the digital clock switching means according to the present invention is that it guarantees that the system never enters a deadlock state in the absence of one clock source.

A further advantage in this context is achieved if each finite state machine has an output, clock enable signal (ClkEn₁, ClkEn₂), each of which is a first input to an AND-gate, wherein each AND-gate has a second input in the form of said clock source (Clk_A, Clk_B), and in that said digital clock switching means also comprises a to the output of each AND-gate connected first OR-gate outputting said clock output (Clk_Out) of said digital clock switching means.

Furthermore, it is an advantage in this context if said output, clock enable signal (Clk_En₁; Clk_En₂) of each finite state machine is connected, via a first double latch synchronizer means, to an input (Other ClkEn₂; Other ClkEn₁) of the other finite state machine, whereby each finite state machine is able to monitor the state of said other clock enable signal (ClkEn₂, ClkEn₁) via said input (Other ClkEn₁, Other ClkEn₂).

A further advantage in this context is achieved if each finite state machine is connected to a second double latch synchronizer means, whereby said input signal (Select) passes via said second double latch synchronizer means.

Furthermore, it is an advantage in this context if said first clock source (Clk_A) is connected to, and controls said first and second double latch synchronizer means connected to said first finite state machine, and in that said second clock source (Clk_B) is connected to, and controls said first and second double latch synchronizer means connected to said second finite state machine.

A further advantage in this context is achieved if said finite state machine is operable to disable said active clock source (Clk_A; Clk_B) before the other finite state machine verifies the presence of its clock source (Clk_B; Clk_A).

According to another embodiment, said finite state machine, associated with said not active clock source (Clk_B; Clk_A) is operable to verify the presence of its clock source (Clk_B; Clk_A) before said other finite state machine disables said active clock source (Clk_A; Clk_B).

Furthermore, it is an advantage in this context if said digital clock switching means also comprises a second OR-gate connected to an Error output (Error₁, Error₂) of each finite state machine.

A further advantage in this context is achieved, if said counter means has decremented said variable (Cnt₁; Cnt₂) to zero, if said finite state machine currently in said CHECK state is operable to enter an ERROR state, wherein said finite state machine is operable to re-enable said active clock source (Clk_A; Clk_B), which will be passed to said clock output (Clk_Out), and to issue an error signal to said second OR-gate.

Furthermore, it is an advantage in this context if each finite state machine also comprises an output (S_{w}OK_{1;}S_{w}OK₂) and an input (Other S_{w}OK₁; Other S_{w}OK₂), wherein said output (S_{w}OK₁; S_{w}OK₂) of each finite state machine is connected, via a third double latch synchronizer means, to said input (Other S_{w}OK₂; Other S_{w}OK₁) of the other finite state machine.

A further advantage in this context is achieved if said first clock source (Clk_A) is connected to, and is operable to control said third double latch synchronizer means connected to said first finite state machine, and in that said second clock source (Clk_B) is connected to, and is operable to control said third double latch synchronizer means connected to said second finite state machine.

Furthermore, it is an advantage in this context, if said finite state machine has its clock enable signal (ClkEn₁; ClkEn₂) active, and said input signal (Select) indicates the switching off of said active clock source (Clk_A; Clk_B), said finite state machine is operable to enter a CHECK state, wherein said active clock source (Clk_A; Clk_B) is disabled if said other finite state machine has its output (S_{w}OK₂; S_{w}OK₁) active before said counter means has decremented said variable (Cnt₁; Cnt₂) to zero, and if said other finite state machine does not has its output (S_{w}OK₂; S_{w}OK₁) active before said counter means has decremented said variable (Cnt₁; Cnt₂) to zero, said finite state machine is operable to enter said ERROR state and issue said error signal to said second OR-gate.

A further advantage in this context is achieved, if said finite state machine has its clock enable signal (ClkEn₁; ClkEn₂) inactive, and said input signal (Select) indicates the switching on of its clock source (Clk_A; Clk_B), said finite state machine is operable to enter a WAIT state and its output (S_{w}OK₁; S_{w}OK₂) is operable to become active, and when said other finite state machine has switched off its clock source (Clk_B; Clk_A) the other clock source (Clk_A; Clk_B) is operable to be active and passed to said clock output (Clk_0ut).

Another object of the present invention is to provide a method for deadlock-free switching of the source of the digital clock for an integrated circuit. This method is performed with the aid of a first and a second clock source (Clk_A, Clk_B), wherein the first clock source (Clk_A) is active, and the second clock source (Clk_B) is inactive. The method comprises the steps:
- to initialize a variable (Cnt₁) to a constant (Nfail₁, Nfail₂) when the switching off of said active clock source (Clk_A) is indicated;
- to decrement said variable (Cnt₁) at each clock cycle;
- and if the presence of said inactive clock source (Clk_B) is verified before said variable (Cnt₁) reaches zero, said switch of said active clock source will be effected (Clk_B); and
- if, on the other hand, said variable (Cnt₁) decrements to zero, no switch of said active clock source will be effected (Clk_A).

The main advantage with the method according to the present invention is that it guarantees that the system never enters a deadlock state in the absence of one clock source.

A further advantage in this context is achieved if said method also comprises the step:
- to disable said active clock source (Clk_A) before the presence of the other clock source (Clk_B) is verified.

Furthermore, it is an advantage in this context if the said method also comprises the step:
- to verify the presence of said inactive clock source (Clk_B) before disabling said active clock source (Clk_A).

A further advantage in this context is achieved if said method also comprises the steps:
- if said variable (Cnt₁) has decremented to zero, to re-enable said active clock source (Clk_A); and
- to issue an error indication.

Furthermore, it is an advantage in this context if said method is performed with the aid of a digital clock switching means comprising a first finite state machine associated with said first clock source (Clk_A), and a second finite state machine associated with said second clock source (Clk_B), wherein each finite state machine has an input signal (Select) operable to control which clock source (Clk_A; Clk_B) that should be active and passed to a clock output (Clk_Out) of said digital clock switching means, wherein each finite state machine comprises a counter means with a variable (Cnt₁; Cnt₂), wherein said method also comprises the step:
- when said input signal (Select) indicates the switching off of said active clock source (Clk_A), to enter a CHECK state with said finite state machine associated with said active clock source (Clk_A).

A further advantage in this context is achieved if each finite state machine has an output, clock enable signal (ClkEn₁, ClkEn₂) which is connected, via a first double latch synchronizer means, to an input (Other ClkEn₂; Other ClkEn₁) of the other finite state machine, wherein the method also comprises the step:
- each finite state machine monitors the state of said other clock enable signal (ClkEn₂, ClkEn₁).

Furthermore, it is an advantage in this context if each finite state machine also comprises an output (S_{w}OK₁; S_{w}OK₂) and an input (Other S_{w}OK₁; Other S_{w}OK₂), wherein the method also comprises the steps:
- if said finite state machine has its clock enable signal (ClkEn₁, ClkEn₂) active, and said input signal (Select) indicates the switching off of said active clock source (Clk_A; Clk_B), to enter a CHECK state with said finite state machine;
- to disable said active clock source (Clk_A; Clk_B) if said other finite state machine has its output (S_{w}OK₂; S_{w}OK₁) active before said counter means has decremented said variable (Cnt₁; Cnt₂) to zero; and
- if said other finite state machine does not has its output (S_{w}OK₂; S_{w}OK₁) active before said counter means has decremented said variable (Cnt₁; Cnt₂) to zero, to enter said ERROR state with said finite state machine; and
- to issue said error signal.

A further advantage in this context is achieved if said method also comprises the steps:
- if said finite state machine has its clock enable signal (ClkEn₁; ClkEn₂) inactive, and said input signal (Select) indicates the switching on of the clock source (Clk_A; Clk_B), to enter a WAIT state with said finite state machine and its output (S_{w}OK₁; S_{w}OK₂) will become active; and
- when said other finite state machine has switched off its clock source (Clk_B; Clk_A), to activate the other clock source (Clk_A; Clk_B), and pass it to said clock output (Clk_Out).

Another object of the present invention is to provide at least one computer program product for deadlock-free switching of the source of the digital clock for an integrated circuit, which computer program product(s) is/are directly loadable into the internal memory of at least one computer digital, which comprises software code portions for performing the method according to the present invention, when the at least one product is/are run on said at least one computer.

The main advantage with the computer program product(s) according to the present invention is that it/they guarantees that the system never enters a deadlock state in the absence of one clock source.

It should be emphasised that the term "comprises/comprising" when used in this specification is taken to specify the presence of stated features, steps or components but does not preclude the presence of one or more other features, integers, steps, components or groups thereof.

Embodiments of the invention will now be described with a reference to the accompanying drawings, in which:

### Brief description of the drawings

Figure 1 is a block diagram of a known circuit 50 for glitch free clock source switch over;
Figure 2 is a state diagram for the finite state machines 52₁, 52₂ comprised in the circuit 50 disclosed in figure 1, in order to explain the function of the circuit 50;
Figure 3 is a block diagram of a first embodiment of a digital clock switching means 10 operable to deadlock-free switch the source of the digital clock for an integrated circuit according to the present invention;
Figure 4 is a flow chart of a method for deadlock-free switching of the source of the digital clock for an integrated circuit according to the present invention;
Figure 5 is a block diagram of a second embodiment of a digital clock switching means 10 according to the present invention;
Figure 6 is a state diagram for the finite state machines 12₁, 12₂ comprised in the digital clock switching means disclosed in figure 5;
Figure 7 is a block diagram of a third embodiment of a digital clock switching means 10 according to the present invention;
Figure 8 is a state diagram for the finite state machines 12₁, 12₂ comprised in the digital clock switching means 10 disclosed in Figure 7; and
Figure 9 is a schematic diagram of some computer program products 102₁, ..., 102₂ according to the present invention.

### Detailed description of embodiments

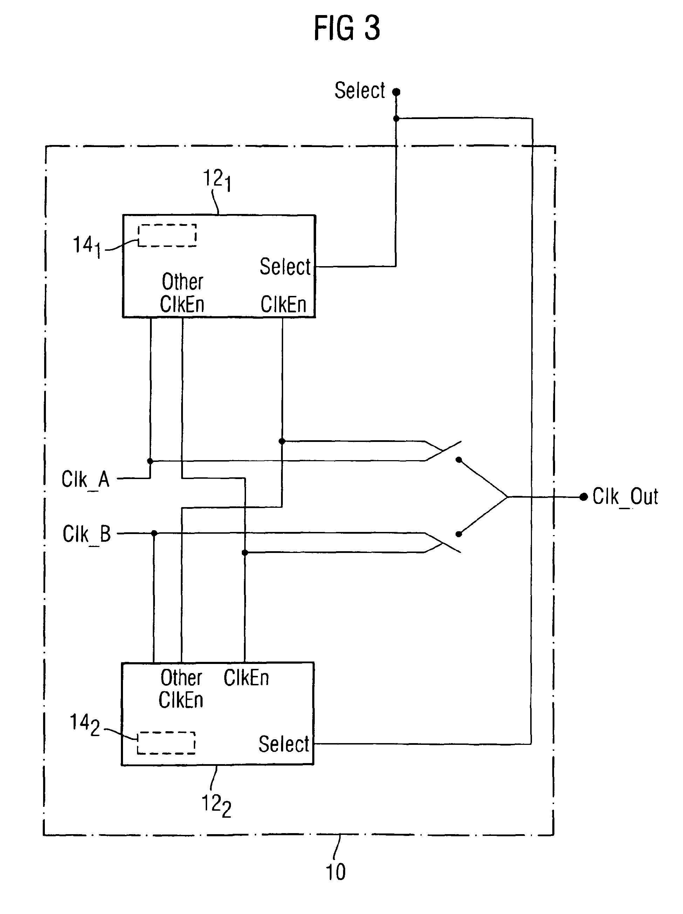

In figure 3 there is disclosed a block diagram of a first embodiment of a digital clock switching means 10 according to the present invention. The digital clock switching means 10 is operable to deadlock-free switch the source of the digital clock for an integrated circuit. The digital clock switching means 10 comprises a first finite state machine 12₁ associated with a first clock source Clk_A, and a second finite state machine 12₂ associated with a second clock source Clk_B. As is apparent from figure 3, the finite state machines 12₁, 12₂ are connected to each other, via the signals ClkEn₁, ClkEn₂, Other ClkEn₁, Other ClkEn₂, in order to monitor the current state of the other finite state machine 12₂, 12₁. Each finite state machine 12₁, 12₂ has an input signal

(Select) operable to control which clock source Clk_A;Clk_B that should be active and passed to a clock output Clk_Out of the digital clock switching means 10. Each finite state machine 12₁, 12₂ comprises a counter means 14₁, 14₂ with a variable (Cnt₁; Cnt₂), wherein the counter means associated with the active clock source get its variable (Cnt₁; Cnt₂) initialised to a constant (Nfail₁, Nfail₂) when the input signal (Select) indicates the switching off of the active clock source Clk_A;Clk_B, whereby the finite state machine 12₁;12₂ associated with the active clock source Clk_A;Clk_B enters a CHECK state, wherein the counter means 14₁; 14₂ decrements the variable (Cnt₁; Cnt₂) at each clock cycle. If the other finite state machine 12₂; 12₁ verifies the presence of its clock source Clk_B;Clk_A before the variable (Cnt₁; Cnt₂) reach zero, the switch of the active clock source will be effected, Clk_B;Clk_A. If, on the other hand, the variable (Cnt₁; Cnt₂) decrements to zero, no switch of the active clock source will be effected Clk_A;Clk_B.

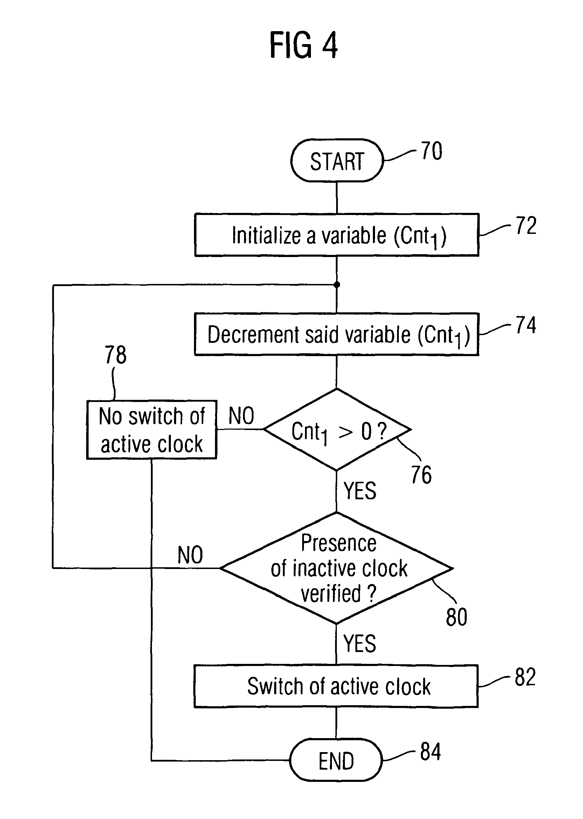

In figure 4 there is disclosed a flow chart of a method for deadlock-free switching of the source of the digital clock for an integrated circuit according to the present invention. The method is performed with the aid of a first and a second clock source Clk_A, Clk_B, wherein the first clock source Clk_A is active, and the second clock source Clk_B is inactive. The method begins at block 70. The method continues, at block 72, with the step: to initialize a variable (Cnt₁) to a constant (Nfail₁, Nfail₂) when the switching off of the active clock source Clk_A is indicated. Thereafter, at block 74, the method continues with the step: to decrement the variable (Cnt₁) at each clock cycle. The method continues, at block 76, by asking the question: Is the variable (Cnt₁) greater than zero? If the answer is negative, the method continues, at block 78, with the step: no switch of the active clock source will be effected, i.e. Clk_A will still be active. If, on the other hand the answer to the question asked in block 76 is affirmative, the method continues, at block 80, by asking the question: Is the presence of the inactive clock source Clk_B verified? If the answer is negative, the method continues, by performing the step according to block 74 again. If, on the other hand, the answer to the question asked in block 80 is affirmative, the method continues, at block 82, with the step: to effect the switch of the active clock source Clk_A, i.e. the clock source Clk_B will be active. The method is completed at block 84.

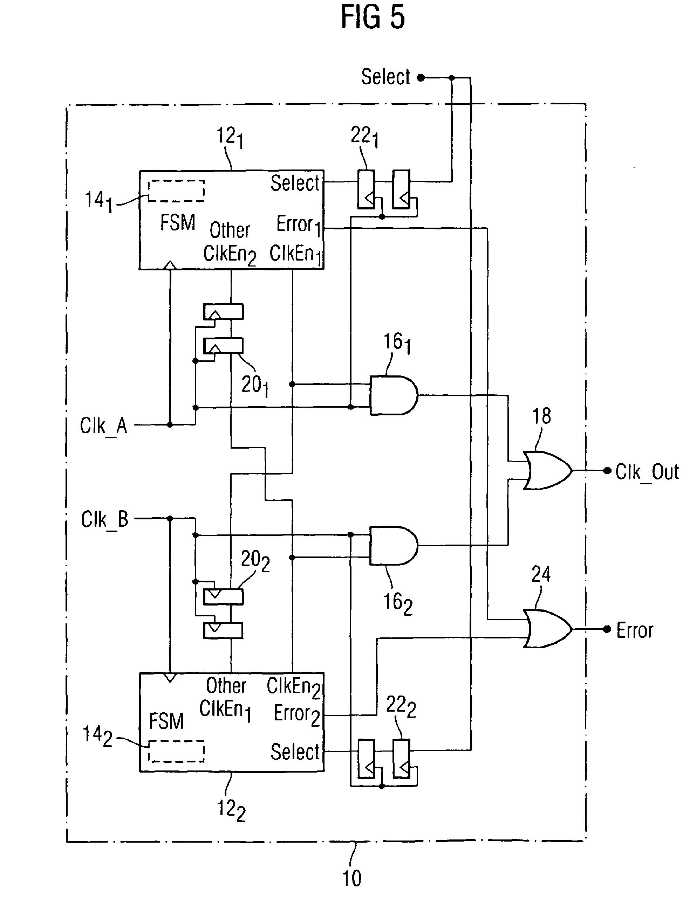

In figure 5 there is disclosed a block diagram of a second embodiment of a digital clock switching means 10 according to the present invention. The digital clock switching means 10 is operable to deadlock-free switch the source of the digital clock for an integrated circuit. The digital clock switching means 10 comprises a first finite state machine 12₁ connected to a first clock source Clk_A , and a second finite state machine 12₂ connected to a second clock source Clk_B. The finite state machines 12₁, 12₂ are connected to each other, via the signals ClkEn₁, ClkEn₂, Other ClkEn₁, Other ClkEn₂, in order to monitor the current state of the other finite state machine 12₁; 12₂. Each finite state machine 12₁, 12₂ has an input signal (Select) operable to control which clock source Clk_A; Clk_B that should be active and passed to a clock output Clk_Out of the digital clock switching means 10. Each finite state machine 12₁, 12₂ comprises a counter means 14₁, 14₂ with a variable (Cnt₁; Cnt₂), wherein the counter means associated with the active clock source get its variable (Cnt₁; Cnt₂) initialized to a constant (Nfail₁, Nfail₂) when the input signal (Select) indicates the switching off of the active clock source Clk_A; Clk_B, whereby the finite state machine 12₁; 12₂ connected to the active clock source Clk_A; Clk_B enters a CHECK state, wherein the counter means 14₁; 14₂ decrements the variable (Cnt₁; Cnt₂) at each clock cycle. If the other finite state machine 12₁; 12₂ verifies the presence of its clock source Clk_B; Clk_A before the variable (Cnt₁; Cnt₂) reach zero, the switch of the active clock source will be effected, Clk_B; Clk_A. If, on the other hand, the variable (Cnt₁; Cnt₂) decrements to zero, no switch of the active clock source will be effected Clk_A; Clk_B. The digital clock switching means 10 also comprises two AND-gates 16₁, 16₂, wherein each AND-gate 16₁, 16₂ has a first input, a clock enable signal, Clk_En₁; Clk_En₂, and a second input in the form of the clock source Clk_A; Clk_B. The digital clock switching means 10 also comprises a first OR-gate 18 connected to each AND-gate 16₁, 16₂, and outputting the clock output Clk_Out.

As is apparent from figure 5, the digital clock switching means 10 also comprises two first double latch synchronizer means 20₁, 20₂, each of which is connected to the finite state machines 12₁, 12₂. Each finite state machine 12₁; 12₂ is connected to a second double latch synchronizer means 22₁; 22₂, whereby the input signal (Select) passes via the second double latch synchronizer means 22₁; 22₂. As is apparent from figure 5, the first clock source Clk_A is connected to, and controls the first and second double latch synchronizer means 20₁, 22₁ connected to the first finite state machine 12₁. The second clock source Clk_B is connected to, and controls the first and second double latch synchronizer means 20₂, 22₂ connected to the second finite state machine 12₂. The digital clock switching means 10 also comprises a second OR-gate 24 connected to an Error output Error₁, Error₂ of each finite state machine 12₁, 12₂. The second OR-gate 24 has an output Error.

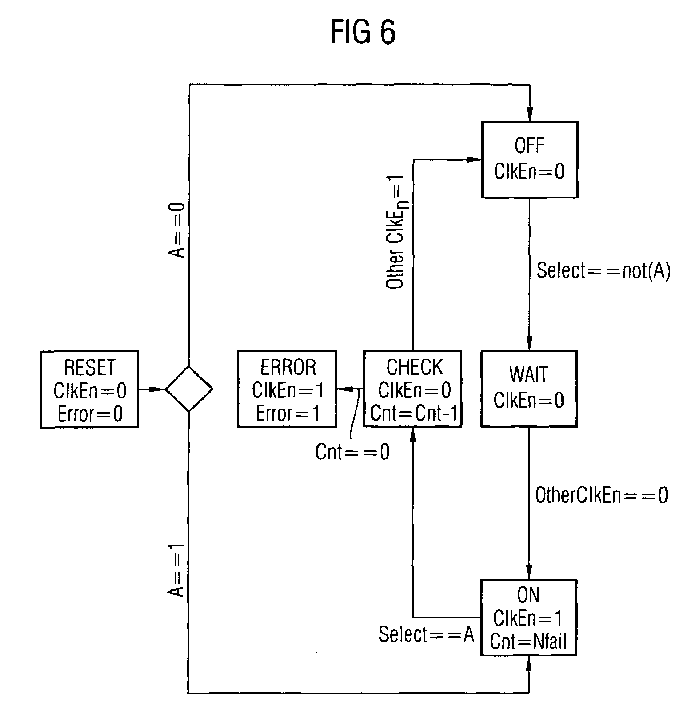

In figure 6 there is disclosed a state diagram for the finite state machines 12₁, 12₂ comprised in the digital clock switching means 10 disclosed in figure 5.

In order to avoid the deadlock situation, it is necessary to verify that the clock to be selected is present, and for the system clock to continue in the event that the clock to be selected is not present.

The main difference between the conventional clock-switch circuit is in the behaviour of the FSM 12₁, 12₂ when switching the associated clock off (transition from state ON to state OFF). In the inventive design, the FSM 12₁, 12₂ must first pass through the state CHECK. Prior to entering the CHECK state, a variable (Cnt₁; Cnt₂) is initialised to a constant (Nfail₁, Nfail₂). While in the CHECK state, the counter 14₁; 14₂ is decremented at each clock cycle. If it is observed that the other FSM has responded to the clock switch and enabled its clock, it is safe to proceed to the OFF state. If the other FSM does not respond, the counter 14₁; 14₂ will decrement to zero. In this case, it is assumed that the other clock is not present and the FSM enters the ERROR state, re-enables the output clock and asserts an error indication. The constant (Nfail_{11;} Nfail₂) should be set to a value such that the counter 14₁; 14₂ will never expire in the event that the other clock is present.

This circuit is primarily intended for applications when a clock is either present or not, and that the clock cannot first not be present and then subsequently start (since this could cause the situation where one FSM 12₁; 12₂ enters the error state and passes its clock to the output at the same time as the other FSM 12₂; 12₁ enters the ON state).

The circuit 10 described here first disables its clock output before verifying the presence of the other clock.

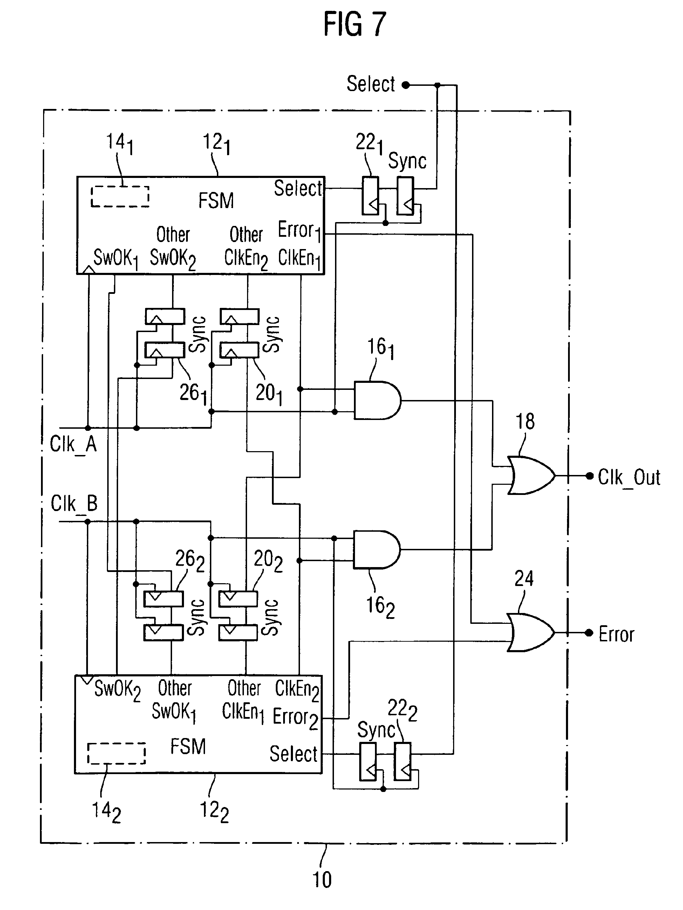

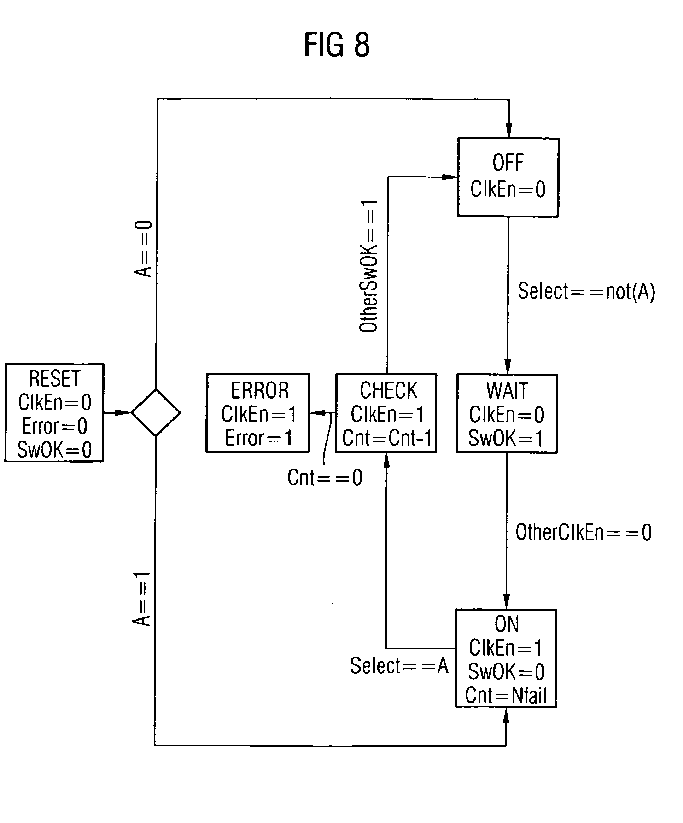

In figure 7 there is disclosed a block diagram of a third embodiment of a digital clock switching means 10 according to the present invention. The similar components in figure 7 as in figure 5 has been designated with the same reference numbers and will not be described in detail again. The main difference between the figures 7 and 5, is that in figure 7, each finite state machine 12₁, 12₂ also comprises an output SwOK₁; SwOK₂, and an output Other SwOK₁; Other SwOK₂, and the output SwOK₂; SwOK₁ of each finite state machine 12₁, 12₂ is connected, via a third double latch synchronizer means 26₁; 26₂ to the input Other SwOK₂; Other SwOK₁ of the other finite state machine 12₁, 12₂. The function of the digital clock switching means 10 disclosed in figure 7 will be described in figure 8.

In figure 8 there is disclosed a state diagram for the finite state machines 12₁, 12₂ comprised in the digital clock switching means 10 disclosed in figure 7.

An alternative implementation of the method could first verify the presence of the other clock, and only then proceed to disable its own clock. Such a circuit would be more complex, since it would require an additional output and input from each FSM 12₁; 12₂, with two synchronisers in each path. The additional output *SwOK* is used to indicate that the state machine 12₂; 12₁ has observed the request to switch on its clock and is prepared to do so.

When an FSM 12₁; 12₂ is in state 'On' (clock enable active), and observes a request to switch off its clock, it first proceeds to the state 'Check' to see that the other FSM 12₂; 12₁ asserts *SwOK.* If this does not appear within the allocated time, the error state is entered. Otherwise, on seeing *SwOK*==*1,* the FSM 12₁; 12₂ shuts off its own clock output enable signal.

When an FSM 12₁; 12₂ is in state 'Off' (clock enable inactive), and observes a request to switch on its clock, it first proceeds to the state 'Wait'. Here, it asserts *SwOK* to indicate that it is capable of switching on its clock. As soon as the other FSM 12₂; 12₁ has responded and switched off its clock, the local clock enable can be asserted.

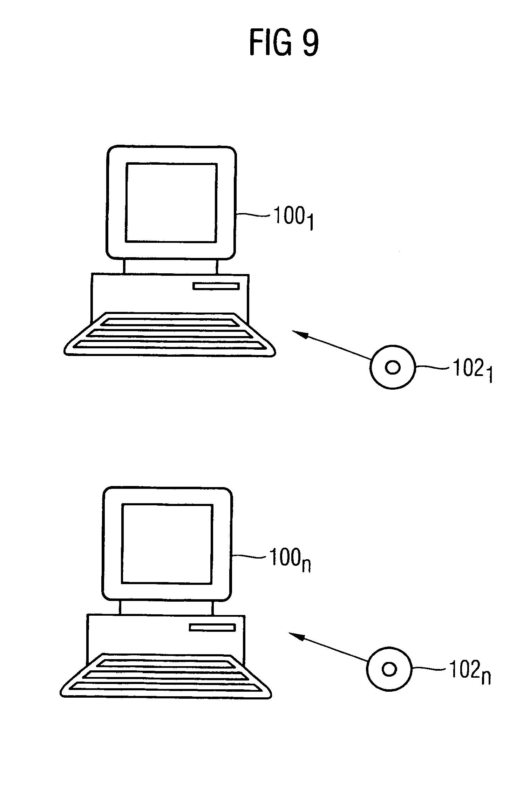

In figure 9 there is disclosed a schematic diagram of some computer program products for deadlock-free switching of the source of the digital clock for an integrated circuit according to the present invention. There is disclosed n different digital computers 100₁, ..., 100ₙ, wherein n is an integer.

There is also disclosed n different computer program products 102₁, ..., 102ₙ, here showed in the form of compact discs. The different computer program products 102₁, ..., 102ₙ are directly loadable into the internal memory of the n different digital computers 100₁, ..., 100ₙ. Each computer program product 102₁, ..., 102ₙ comprises software code portions for performing some or all the steps of figure 4 when the product(s) 102₁ ..., 102ₙ is/are run on said computer(s) 100₁ ..., 100ₙ. Said computer program products 102₁, ..., 102ₙ can e. g. be in the form of floppy disks, RAM disks, magnetic tapes, opto magnetical disks or any other suitable products.

The invention is not limited to the embodiments described in the foregoing. It will be obvious that many different modifications are possible within the scope of the following claims.

## Claims

1. A digital clock switching means (10) operable to deadlock-free switch the source of the digital clock for an integrated circuit, comprising a first finite state machine (12₁) associated with a first clock source (Clk_A), and a second finite state machine (12₂) associated with a second clock source (Clk_B), wherein said finite state machines (12₁, 12₂) are connected to each other in order to monitor the current state of the other finite state machine (12₂; 12₁), wherein each finite state machine (12₁, 12₂) has an input signal (Select) operable to control which clock source (Clk_A; Clk_B) that should be active and passed to a clock output (Clk_Out) of said digital clock switching means (10), **characterized in that** each finite state machine (1₂1; 12₂) comprises a counter means (14₁; 14₂) with a variable (Cnt₁; Cnt₂), wherein said counter means (14₁; 14₂) associated with said active clock source (Clk_A; Clk_B) will get its variable (Cnt₁;
Cnt₂) initialised to a constant (Nfail₁, Nfail₂) when said input signal (Select) indicates the switching off of said active clock source (Clk_A; Clk_B), whereby said finite state machine (12₁; 12₂) associated with said active clock source (Clk_A; Clk_B) enters a CHECK state, wherein said counter means (14₁; 14₂) decrements said variable (Cnt₁; Cnt₂) at each clock cycle, and if the other finite state machine (12_{2;} 12₁) verifies the presence of its clock source (Clk_B; Clk_A) before said variable (Cnt₁; Cnt₂) reach zero, said switch of said active clock source will be effected (Clk_B; Clk_A) , and if, on the other hand, said variable (Cnt₁; Cnt₂) decrements to zero, no switch of said active clock source will be effected (Clk_A; Clk_B).

2. A digital clock switching means (10) according to Claim 1, **characterized in that** each finite state machine (12₁, 12₂) has an output, clock enable signal (ClkEn₁, ClkEn₂), each of which is a first input to an AND-gate (16₁, 16₂), wherein each AND-gate (16₁, 16₂) has a second input in the form of said clock source (Clk_A, Clk_B), and **in that** said digital clock switching means (10) also comprises a to the output of each AND-gate (16₁, 16₂) connected first OR-gate (18) outputting said clock output (Clk_Out) of said digital clock switching means (10).

3. A digital clock switching means (10) according to Claim 1 or 2, **characterized in that** said output, clock enable signal (Clk_En₁; Clk_En₂) of each finite state machine (12₁; 12₂) is connected, via a first double latch synchronizer means (20₁; 20₂), to an input (Other ClkEn₂; Other ClkEn₁) of the other finite state machine (12₂; 12₁), whereby each finite state machine (12₁, 12₂) is able to monitor the state of said other clock enable signal (ClkEn₂, ClkEn₁) via said input (Other ClkEn₁, Other ClkEn₂).

4. A digital clock switching means (10) according to any one of Claims 1 - 3, **characterized in that** each finite state machine (12_{1;} 12₂) is connected to a second double latch synchronizer means (22_{1;} 22₂), whereby said input signal (Select) passes via said second double latch synchronizer means (22₁; 22₂) .

5. A digital clock switching means (10) according to Claim 4, when dependent on Claim 3, **characterized in that** said first clock source (Clk_A) is connected to, and controls said first and second double latch synchronizer means (20₁, 22₁) connected to said first finite state machine (12₁), and **in that** said second clock source (Clk_B) is connected to, and controls said first and second double latch synchronizer means (20₂, 22₂) connected to said second finite state machine (12₂).

6. A digital clock switching means (10) according to any one of Claims 1 - 5, **characterized in that** said finite state machine (12₁; 12₂) is operable to disable said active clock source (Clk_A; Clk_B) before the other finite state machine (12₂;12₁) verifies the presence of its clock source (Clk_B; Clk_A).

7. A digital clock switching means (10) according to any one of Claims 1 - 5, **characterized in that** said finite state machine (12₂; 12₁), associated with said not active clock source (Clk_B; Clk_A) is operable to verify the presence of its clock source (Clk_B; Clk_A) before said other finite state machine (12₁; 12₂) disables said active clock source (Clk_A; Clk_B).

8. A digital clock switching means (10) according to any one of Claims 1 - 6, **characterized in that** said digital clock switching means (10) also comprises a second OR-gate (24) connected to an Error output (Error₁, Error₂) of each finite state machine (12₁, 12₂) .

9. A digital clock switching means (10) according to Claim 8, **characterized in that**, if said counter means (14₁; 14₂) has decremented said variable (Cnt₁; Cnt₂) to zero, said finite state machine (12_{1;} 12₂) currently in said CHECK state is operable to enter an ERROR state, wherein said finite state machine (12_{1;} 12₂) is operable to re-enable said active clock source (Clk_A; Clk_B), which will be passed to said clock output (Clk_Out), and to issue an error signal to said second OR-gate (24).

10. A digital clock switching means (10) according to Claim 7, **characterized in that** each finite state machine (12₁;12₂) also comprises an output (S_{w}OK₁;S_{w}OK₂) and an input (Other SwOK1; Other S_{w}OK₂), wherein said output (S_{w}OK₁; S_{w}OK₂) of each finite state machine (12₁;12₂) is connected, via a third double latch synchronizer means (26₁;26₂), to said input (Other S_{w}OK₂; Other S_{w}OK₁) of the other finite state machine (12₂;12₁).

11. A digital clock switching means (10) according to Claim 10, **characterized in that** said first clock source (Clk_A) is connected to, and is operable to control said third double latch synchronizer means (26₁) connected to said first finite state machine (12₁), and **in that** said second clock source (Clk_B) is connected to, and is operable to control said third double latch synchronizer means (26₂) connected to said second finite state machine (12₂).

12. A digital clock switching means (10) according to Claim 11, **characterized in that**, if said finite state machine (12₁; 12₂) has its clock enable signal (ClkEn₁; ClkEn₂) active, and said input signal (Select) indicates the switching off of said active clock source (Clk_A; Clk_B), said finite state machine (12₁; 12₂) is operable to enter a CHECK state, wherein said active clock source (Clk_A; Clk_B) is disabled if said other finite state machine (12₂; 12₁) has its output (S_{w}OK₂; S_{w}OK₁) active before said counter means (14₁; 14₂) has decremented said variable (Cnt₁; Cnt₂) to zero, and if said other finite state machine (12₂; 12₁) does not has its output (S_{w}OK₂; S_{w}OK₁) active before said counter means (14₁; 14₂) has decremented said variable (Cnt₁; Cnt₂) to zero, said finite state machine (12₁; 12₂) is operable to enter said ERROR state and issue said error signal to said second OR-gate (24).

13. A digital clock switching means (10) according to any one of Claims 10-12, **characterized in that**, if said finite state machine (12₁; 12₂) has its clock enable signal (ClkEn₁; ClkEn₂) inactive, and said input signal (Select) indicates the switching on of its clock source (Clk_A; Clk_B), said finite state machine (12₁; 12₂) is operable to enter a WAIT state and its output (S_{w}OK₁; S_{w}OK₂) is operable to become active, and when said other finite state machine (12₂; 12₁) has switched off its clock source (Clk_B; Clk_A) the other clock source (Clk_A; Clk_B) is operable to be active and passed to said clock output (Clk_Out).

14. A method for deadlock-free switching of the source of the digital clock for an integrated circuit, with the aid of a first and a second clock source (Clk_A, Clk_B), wherein said first clock source (Clk_A) is active, and said second clock source (Clk_B) is inactive, wherein said method comprises the steps:
- initializing a variable (Cnt₁) to a constant (Nfail₁) when the switching off of said active clock source (Clk_A) is indicated;
- decrementing said variable (Cnt₁) at each clock cycle;
- effecting said switch of said active clock source (Clk_A), if the presence of said inactive clock source (Clk_B) is verified before said variable (Cnt₁) reaches zero, ; and
- on the other hand not effecting said switch of said active clock source (Clk_A), if said variable (Cnt₁) decrements to zero,
**characterized in that** said method also comprises the step:
- verifying the presence of said inactive clock source (Clk_B) before disabling said active clock source (Clk_A).

15. A method for deadlock-free switching of the source of the digital clock according to Claim 14, **characterized in that** said method also comprises the steps:
- issuing an error indication, if said variable (Cnt₁) has decremented to zero.

16. A method for deadlock-free switching of the source of the digital clock according to Claim 14 or 15, **characterized in that** said method is performed with the aid of a digital clock switching means (10) comprising a first finite state machine (12₁) associated with said first clock source (Clk_A), and a second finite state machine (12₂) associated with said second clock source (Clk_B), wherein each finite state machine (12₁, 12₂) has an input signal (Select) operable to control which clock source (Clk_A; Clk_B) that should be active and passed to a clock output (Clk_Out) of said digital clock switching means (10), wherein each finite state machine (12₁; 12₂) comprises a counter means (14₁; 14₂) with a variable (Cnt₁; Cnt₂), wherein said method also comprises the step:
- entering a CHECK state with said finite state machine (12₁) associated with said active clock source (Clk_A), when said input signal (Select) indicates the switching off of said active clock source (Clk_A).

17. A method for deadlock-free switching of the source of the digital clock according to Claim 16, **characterized in that** each finite state machine (12₁, 12₂) has an output, clock enable signal (ClkEn₁, ClkEn₂) which is connected, via a first double latch synchronizer means (20₁; 20₂), to an input (Other ClkEn₂; Other ClkEn₁) of the other finite state machine (12₂; 12₁), wherein the method also comprises the step:
- using each finite state machine (12₁, 12₂) to monitor the state of said other clock enable signal (ClkEn₂, ClkEn₁).

18. A method for deadlock-free switching of the source of the digital clock according to Claim 16 or 17, when dependent on Claim 16, **characterized in that** each finite state machine (12₁; 12₂) also comprises an output (S_{w}OK₁; S_{w}OK₂) and an input (Other S_{w}OK₁; Other S_{w}OK₂), wherein the method also comprises the steps:
- entering a CHECK state with said finite state machine (12₁; 12₂), if said finite state machine (12₁; 12₂) has its clock enable signal (ClkEn₁, ClkEn₂) active, and said input signal (Select) indicates the switching off of said active clock source (Clk_A; Clk_B) ;
- disabling said active clock source (Clk_A; Clk_B) if said other finite state machine (12₂; 12₁) has its output (S_{w}OK₂; S_{w}OK₁) active before said counter means (14₁; 14₂) has decremented said variable (Cnt₁; Cnt₂) to zero; and
- if said other finite state machine (12₂; 12₁) does not has its output (S_{w}OK₂; S_{w}OK₁) active before said counter means (14₁; 14₂) has decremented said variable (Cnt₁; Cnt₂) to zero,
- entering said ERROR state with said finite state machine (12₁; 12₂); and
- issuing said error signal.

19. A method for deadlock-free switching of the source of the digital clock according to Claim 16 or 17, **characterized in that** said method also comprises the steps:
- if said finite state machine (12₁; 12₂) has its clock enable signal (ClkEn₁; ClkEn₂) inactive, and said input signal (Select) indicates the switching on of its clock source (Clk_A; Clk_B), entering a WAIT state with said finite state machine (12₁; 12₂) and settling its output (S_{w}OK₁; S_{w}OK₂) to active; and
- when said other finite state machine (12₂; 12₁) has switched off its clock source (Clk_B; Clk_A), activating the other clock source (Clk_A; Clk_B), and passing it to said clock output (Clk_Out).

20. At least one computer program product (102₁, ..., 102ₙ) for deadlock-free switching of the source of the digital clock for an integrated circuit, which computer program product (s) (102₁, ..., 102ₙ) is/are directly loadable into the internal memory of at least one digital computer (100₁, ..., 100ₙ), comprising software code portions for performing the steps of Claim 14 when said at least one product (102₁, ..., 102ₙ) is/are run on said at least one computer (100₁, ..., 100ₙ).

## Patentansprüche

1. Digitales Taktumschaltmittel (10), das dafür betreibbar ist, die Quelle des digitalen Takts für eine integrierte Schaltung blockierungsfrei umzuschalten, umfassend einen ersten Zustandsautomaten (12₁), der mit einer ersten Taktquelle (Clk_A) assoziiert ist, und einen zweiten Zustandsautomaten (12₂), der mit einer zweiten Taktquelle (Clk_B) assoziiert ist, wobei die Zustandsautomaten (12₁, 12₂) miteinander verbunden sind, um den aktuellen Zustand des anderen Zustandsautomaten (12₂; 12₁) zu überwachen, wobei jeder Zustandsautomat (12₁, 12₂) ein Eingangssignal (Select) aufweist, das betreibbar ist, um zu steuern, welche Taktquelle (Clk_A, CLK_B) aktiv sein und zu einem Taktausgang (Clk_Out) des digitalen Taktumschaltmittels (10) geleitet werden soll, **dadurch gekennzeichnet, dass** jeder Zustandsautomat (12₁; 12₂) ein Zählermittel (14₁; 14₂) mit einer Variablen (Cnt₁; Cnt₂) umfasst, wobei das Zählermittel (14₁; 14₂), das mit der aktiven Taktquelle (Clk_A; Clk_B) assoziiert ist, seine Variable (Cnt₁; Cnt₂) auf eine Konstante (Nfail₁; Nfail₂) initialisiert bekommt, wenn das Eingangssignal (Select) das Ausschalten der aktiven Taktquelle (Clk_A; Clk_B) anzeigt, wodurch der mit der aktiven Taktquelle (Clk_A; Clk_B) assoziierte Zustandsautomat (12₁; 12₂) in einen CHECK-Zustand eintritt, wobei das Zählermittel (14₁; 14₂) die Variable (Cnt₁; Cnt₂) bei jedem Taktzyklus dekrementiert, und wenn der andere Zustandsautomat (12₂, 12₁) die Anwesenheit seiner Taktquelle (Clk_B; Clk_A) verifiziert, bevor die Variable (Cnt₁; Cnt₂) null erreicht, das Umschalten der aktiven Taktquelle bewirkt wird (Clk_B; Clk_A), und wenn dagegen die Variable (Cnt₁; Cnt₂) auf null dekrementiert, kein Umschalten der aktiven Taktquelle bewirkt wird (Clk_A; Clk_B).

2. Digitales Taktumschaltmittel (10) nach Anspruch 1, **dadurch gekennzeichnet, dass** jeder Zustandsautomat (12₁, 12₂) eine Ausgabe, das Taktfreigabesignal (ClkEn₁; ClkEn₂), aufweist, die jeweils eine erste Eingabe in ein AND-Gatter (16₁, 16₂) sind, wobei jedes AND-Gatter (16₁, 16₂) eine zweite Eingabe in der Form der Taktquelle (Clk_A, Clk_B) aufweist, und **dadurch**, dass das digitale Taktumschaltmittel (10) außerdem ein mit dem Ausgang jedes AND-Gatters (16₁, 16₂) verbundenes erstes OR-Gatter (18) umfasst, das die Taktausgabe (Clk_Out) des digitalen Taktumschaltmittels (10) ausgibt.

3. Digitales Taktumschaltmittel (10) nach Anspruch 1 oder 2, **dadurch gekennzeichnet, dass** die Ausgabe, das Taktfreigabesignal (Clk_En₁; Clk_En₂) jedes ZustandsZustandsautomaten (12₁; 12₂) über ein erstes Doppel-Latch-Synchronisatormittel (20₁; 20₂) mit einem Eingang (Other ClkEn₂; Other ClkEn₁) des anderen Zustandsautomaten (12₂; 12₁) verbunden ist, wodurch jeder Zustandsautomat (12₁, 12₂) in der Lage ist, den Zustand des anderen Taktfreigabesignals (ClkEn₂; ClkEn₁) über den Eingang (Other C1kEn₁; Other ClkEn₂) zu überwachen.

4. Digitales Taktumschaltmittel (10) nach einem der Ansprüche 1-3, **dadurch gekennzeichnet, dass** jeder Zustandsautomat (12₁, 12₂) mit einem zweiten Doppel-Latch-Synchronisatormittel (22₁; 22₂) verbunden ist, wodurch das Eingangssignal (Select) über das zweite Doppel-Latch-Synchronisatormittel (22₁; 22₂) verläuft.

5. Digitales Taktumschaltmittel (10) nach Anspruch 4 bei Abhängigkeit von Anspruch 3, **dadurch gekennzeichnet, dass** die erste Taktquelle (Clk_A) mit dem mit dem ersten Zustandsautomaten (12₁) verbundenen ersten und zweiten Doppel-Latch-Synchronisatormittel (20₁, 22₁) verbunden ist und diese steuert, und **dadurch**, dass die zweite Taktquelle (Clk_B) mit dem mit dem zweiten Zustandsautomaten (12₂) verbundenen ersten und zweiten Doppel-Latch-Synchronisatormittel (20₂, 22₂) verbunden ist und diese steuert.

6. Digitales Taktumschaltmittel (10) nach einem der Ansprüche 1-5, **dadurch gekennzeichnet, dass** der Zustandsautomat (12₁, 12₂) betreibbar ist, um die aktive Taktquelle (Clk_A; Clk_B) zu sperren, bevor der andere Zustandsautomat (12₂; 12₁) die Anwesenheit seiner Taktquelle (Clk_B; Clk_A) verifiziert.

7. Digitales Taktumschaltmittel (10) nach einem der Ansprüche 1-5, **dadurch gekennzeichnet, dass** der Zustandsautomat (12₂, 12₁), der mit der nichtaktiven Taktquelle (Clk_B; Clk_A) assoziiert ist, betreibbar ist, um die Anwesenheit seiner Taktquelle (Clk_B; Clk_A) zu verifizieren, bevor der andere Zustandsautomat (12₁; 12₂) die aktive Taktquelle (Clk_A; Clk_B) sperrt.

8. Digitales Taktumschaltmittel (10) nach einem der Ansprüche 1-6, **dadurch gekennzeichnet, dass** das digitale Taktumschaltmittel (10) außerdem ein zweites OR-Gatter (24) umfasst, das mit einem Error-Ausgang (Error₁, Error₂) jedes Zustandsautomaten (12₁, 12₂) verbunden ist.

9. Digitales Taktumschaltmittel (10) nach Anspruch 8, **dadurch gekennzeichnet, dass**, wenn das Zählermittel (14₁; 14₂) die Variable (Cnt₁; Cnt₂) auf null dekrementiert hat, der sich gerade in dem CHECK-Zustand befindende Zustandsautomat (12₁, 12₂) betreibbar ist, um in einen ERROR-Zustand einzutreten, wobei der Zustandsautomat (12₁, 12₂) betreibbar ist, um die aktive Taktquelle (Clk_A; Clk_B), die zu dem Taktausgang (Clk_Out) geleitet wird, wieder freizugeben und ein Fehlersignal an das zweite OR-Gatter (24) auszugeben.

10. Digitales Taktumschaltmittel (10) nach Anspruch 7, **dadurch gekennzeichnet, dass** jeder Zustandsautomat (12₁; 12₂) außerdem einen Ausgang (S_{w}OK₁; S_{w}OK₂) und einen Eingang (Other S_{w}OK₁; Other S_{w}OK₂) umfasst, wobei der Ausgang (S_{w}OK₁; S_{W}OK₂) jedes Zustandsautomaten (12₁; 12₂) über ein drittes Doppel-Latch-Synchronisatormittel (26₁; 26₂) mit dem Eingang (Other S_{w}OK₂; Other S_{w}OK₁) des anderen Zustandsautomaten (12₂; 12₁) verbunden ist.

11. Digitales Taktumschaltmittel (10) nach Anspruch 10, **dadurch gekennzeichnet, dass** die erste Taktquelle (Clk_A) mit dem mit dem ersten Zustandsautomaten (12₁) verbundenen dritten Doppel-Latch-Synchronisatormittel (26₁) verbunden und betreibbar ist, dieses zu steuern, und **dadurch**, dass die zweite Taktquelle (Clk_B) mit dem mit dem zweiten Zustandsautomaten (12₂) verbundenen dritten Doppel-Latch-Synchronisatormittel (26₂) verbunden und betreibbar ist, dieses zu steuern.

12. Digitales Taktumschaltmittel (10) nach Anspruch 11, **dadurch gekennzeichnet, dass**, wenn bei dem Zustandsautomaten (12₁; 12₂) sein Taktfreigabesignal (ClkEn₁; ClkEn₂) aktiv ist und das Eingangssignal (Select) das Ausschalten der aktiven Taktquelle (Clk_A; Clk_B) anzeigt, der Zustandsautomat (12₁; 12₂) betreibbar ist, in einen CHECK-Zustand einzutreten, wobei die aktive Taktquelle (Clk_A; Clk_B) gesperrt wird, wenn bei dem anderen Zustandsautomaten (12₂; 12₁) sein Ausgang (S_{w}OK₂; S_{w}OK₁) aktiv ist, bevor das Zählermittel (14₁; 14₂) die Variable (Cnt₁; Cnt₂) auf null dekrementiert hat, und wenn bei dem anderen Zustandsautomaten (12₂; 12₁) sein Ausgang (S_{W}OK₂; S_{w}OK₁) nicht aktiv ist, bevor das Zählermittel (14₁; 14₂) die Variable (Cnt₁; Cnt₂) auf null dekrementiert hat, der Zustandsautomat (12₁; 12₂) betreibbar ist, in den ERROR-Zustand einzutreten und das Fehlersignal an das zweite OR-Gatter (24) auszugeben.

13. Digitales Taktumschaltmittel (10) nach einem der Ansprüche 10-12, **dadurch gekennzeichnet, dass**, wenn bei dem Zustandsautomaten (12₁; 12₂) sein Taktfreigabesignal (ClkEn₁; ClkEn₂) inaktiv ist und das Eingangssignal (Select) das Einschalten seiner Taktquelle (Clk_A; Clk_B) anzeigt, der Zustandsautomat (12₁; 12₂) betreibbar ist, in einen WAIT-Zustand einzutreten, und sein Ausgang (S_{w}OK₁; S_{w}OK₂) betreibbar ist, aktiv zu werden, und wenn der andere Zustandsautomat (12₂; 12₁) seine Taktquelle (Clk_B; Clk_A) ausgeschaltet hat, die andere Taktquelle (Clk-A; Clk_B) betreibbar ist, aktiv zu sein und zu dem Taktausgang (Clk_Out) geleitet zu werden.

14. Verfahren zum blockierungsfreien Umschalten der Quelle des digitalen Takts für eine integrierte Schaltung mit Hilfe einer ersten und einer zweiten Taktquelle (Clk_A; Clk_B), wobei die erste Taktquelle (Clk_A) aktiv ist und die zweite Taktquelle (Clk_B) inaktiv ist, wobei das Verfahren die folgenden Schritte umfasst:
- Initialisieren einer Variablen (Cnt₁) auf eine Konstante (Nfail₁), wenn das Ausschalten der aktiven Taktquelle (Cik_A) angezeigt wird;
- Dekrementieren der Variablen (Cnt₁) bei jedem Taktzyklus;
- Bewirken des Umschaltens der aktiven Taktquelle (Clk_A), wenn die Anwesenheit der inaktiven Taktquelle (Clk_B) verifiziert wird, bevor die Variable (Cnt₁) null erreicht; und
- dagegen Nichtbewirken des Umschaltens der aktiven Taktquelle (Clk_A), wenn die Variable (Cnt₁) auf null dekrementiert,
**dadurch gekennzeichnet, dass** das Verfahren außerdem den folgenden Schritt umfasst:
- Verifizieren der Anwesenheit der inaktiven Taktquelle (Clk_B) vor dem Sperren der aktiven Taktquelle (Clk_A).

15. Verfahren zum blockierungsfreien Umschalten der Quelle des digitalen Takts nach Anspruch 14, **dadurch gekennzeichnet, dass** das Verfahren außerdem den folgenden Schritt umfasst:
- Ausgeben einer Fehlerindikation, wenn die Variable (Cnt₁) auf null dekrementiert hat.

16. Verfahren zum blockierungsfreien Umschalten der Quelle des digitalen Takts nach Anspruch 14 oder 15, **dadurch gekennzeichnet, dass** das Verfahren mit Hilfe eines digitalen Taktumschaltmittels (10) ausgeführt wird, das einen mit der ersten Taktquelle (Clk_A) assoziierten ersten Zustandsautomaten (12₁) und einen mit der zweiten Taktquelle (Clk_B) assoziierten zweiten Zustandsautomaten (12₂) umfasst, wobei jeder Zustandsautomat (12₁, 12₂) ein Eingangssignal (Select) aufweist, das betreibbar ist, zu steuern, welche Taktquelle (Clk_A; Clk_B) aktiv sein und zu einem Taktausgang (Clk_Out) des digitalen Taktumschaltmittels (10) geleitet werden soll, wobei jeder Zustandsautomat (12₁, 12₂) ein Zählermittel (14₁; 14₂) mit einer Variablen (Cnt₁; Cnt₂) umfasst, wobei das Verfahren außerdem den folgenden Schritt umfasst:
- Eintreten in einen CHECK-Zustand mit dem mit der aktiven Taktquelle (Clk_A) assoziierten Zustandsautomaten (12₁), wenn das Eingangssignal (Select) das Ausschalten der aktiven Taktquelle (Clk_A) anzeigt.

17. Verfahren zum blockierungsfreien Umschalten der Quelle des digitalen Takts nach Anspruch 16, **dadurch gekennzeichnet, dass** jeder Zustandsautomat (12₁, 12₂) eine Ausgabe, das Taktfreigabesignal (ClkEn₁; ClkEn₂), aufweist, die über ein erstes Doppel-Latch-Synchronisatormittel (20₁; 20₂) mit einem Eingang (Other ClkEn₂; Other ClkEn₁) des anderen Zustandsautomaten (12₂; 12₁) verbunden ist, wobei das Verfahren außerdem den folgenden Schritt umfasst:
- Verwenden jedes Zustandsautomaten (12₁, 12₂), um den Zustand des anderen Taktfreigabesignals (ClkEn₂, ClkEn₁) zu überwachen.

18. Verfahren zum blockierungsfreien Umschalten der Quelle des digitalen Takts nach Anspruch 16 oder 17 bei Abhängigkeit von Anspruch 16, **dadurch gekennzeichnet, dass** jeder Zustandsautomat (12₁; 12₂) außerdem einen Ausgang (S_{w}OK₁; S_{w}OK₂) und einen Eingang (Other S_{w}OK₁; Other S_{w}OK₂) umfasst, wobei das Verfahren außerdem die folgenden Schritte umfasst:
- Eintreten in einen CHECK-Zustand mit dem Zustandsautomaten (12₁; 12₂), wenn bei dem Zustandsautomaten (12₁; 12₂) sein Taktfreigabesignal (ClkEn₁, ClkEn₂) aktiv ist und das Eingangssignal (Select) das Ausschalten der aktiven Taktquelle (Clk_A; Clk_B) anzeigt;
- Sperren der aktiven Taktquelle (Clk_A; Clk_B), wenn bei dem anderen Zustandsautomaten (12₂; 12₁) sein Ausgang (S_{w}OK₂; S_{w}OK₁) aktiv ist, bevor das Zählermittel (14₁; 14₂) die Variable (Cnt₁; Cnt₂) auf null dekrementiert hat; und
- wenn bei dem anderen Zustandsautomaten (12₂; 12₁) sein Ausgang (S_{w}OK₂; S_{w}OK₁) nicht aktiv ist, bevor das Zählermittel (14₁; 14₂) die Variable (Cnt₁; Cnt₂) auf null dekrementiert hat,
- Eintreten in den ERROR-Zustand mit dem Zustandsautomaten (12₁; 12₂) ; und
- Ausgeben des Fehlersignals.

19. Verfahren zum blockierungsfreien Umschalten der Quelle des digitalen Takts nach Anspruch 16 oder 17, **dadurch gekennzeichnet, dass** das Verfahren außerdem die folgenden Schritte umfasst:
- wenn bei dem Zustandsautomaten (12₁; 12₂) sein Taktfreigabesignal (ClkEn₁; ClkEn₂) inaktiv ist und das Eingangssignal (Select) das Einschalten seiner Taktquelle (Clk_A; Clk_B) anzeigt, Eintreten in einen WAIT-Zustand mit dem Zustandsautomaten (12₁; 12₂) und Setzen seines Ausgangs (S_{w}OK₁; S_{w}OK₂) auf aktiv; und
- wenn der andere Zustandsautomat (12₂; 12₁) seine Taktquelle (Clk_B; Clk_A) ausgeschaltet hat, Aktivieren der anderen Taktquelle (Clk_A; Clk_B) und Leiten dieser zu dem Taktausgang (Clk_Out).

20. Mindestens ein Computerprogrammprodukt (102₁, ..., 102ₙ) zum blockierungsfreien Umschalten der Quelle des digitalen Takts für eine integrierte Schaltung, wobei das Computerprogrammprodukt bzw. die Computerprogrammprodukte (102₁, ..., 102ₙ) direkt in den internen Speicher mindestens eines digitalen Computers (100₁, ..., 100ₙ) ladbar ist/sind, mit Softwarecodeteilen zum Ausführen der Schritte des Anspruchs 14, wenn das mindestens eine Produkt (102₁, ..., 102ₙ) auf dem mindestens einen Computer (100₁, ..., 100ₙ) ausgeführt wird/werden.

## Revendications

1. Moyen (10) numérique de commutation d'horloge pouvant fonctionner pour commuter sans impasse la source de l'horloge numérique pour un circuit intégré, comprenant un premier automate (12₁) fini associé à une première source (Clk_A) d'horloge et un deuxième automate (12₂) fini associé à une deuxième source (Clk_B) d'horloge, dans lequel les automates (12₁, 12₂) finis sont reliés l'un à l'autre, de manière à contrôler l'état présent de l'autre automate (12₂, 12₁) fini, dans lequel chaque automate (12₁, 12₂) fini a un signal (Select) d'entrée pouvant fonctionner pour commander la source (Clk_A, Clk_B) d'horloge, qui doit être active, et passer à une sortie (Clk_out) d'horloge du moyen (10) numérique de commutation d'horloge, **caractérisé en ce que** chaque automate (12₁, 12₂) fini comprend un moyen (14₁, 14₂) de comptage ayant une variable (Cnt₁, Cnt₂), dans lequel le moyen (14₁, 14₂) de comptage associé à la source (Clk_A, Clk_B) d'horloge active aura sa variable (Cnt₁, Cnt₂) initialisée à une constante (Nfail₁, Nfail₂) lorsque le signal (Select) d'entrée indique la mise hors circuit de la source (Clk_A, Clk_B) d'horloge active, l'automate (12₁, 12₂) fini associé à la source (Clk_A, Clk_B) d'horloge active entrant dans un état CHECK lorsque le moyen (14₁, 14₂) de comptage décrémente la variable (Cnt₁, Cnt₂) à chaque cycle d'horloge, et si l'autre automate (12₂, 12₁) fini vérifie la présence de sa source (Clk_B, Clk_A) d'horloge avant que la variable (Cnt₁, Cnt₂) atteigne zéro, la commutation de la source d'horloge active sera effectuée (Clk_B, Clk_A) et si, d'autre part, la variable (Cnt₁, Cnt₂) se décrémente jusqu'à zéro, une commutation de la source d'horloge active ne sera pas effectuée (Clk_A, Clk_B).

2. Moyen (10) numérique de commutation d'horloge suivant la revendication 1, **caractérisé en ce que** chaque automate (12₁, 12₂) fini a une sortie, un signal (ClkEn₁, clkEn₂) de validation d'horloge, chacun d'entre eux est une première entrée allant à une porte ET (16₁, 16₂), dans lequel chaque porte ET (16₁, 16₂) a une deuxième entrée sous la forme de la source (Clk_A, Clk_B) d'horloge et **en ce que** le moyen (10) numérique de commutation d'horloge comprend aussi une première porte OU (18) reliée à la sortie de chaque porte ET (16₁, 16₂) sortant la sortie (Clk_Out) d'horloge du moyen (10) numérique de commutation d'horloge.

3. Moyen (10) numérique de commutation d'horloge suivant la revendication 1 ou 2, **caractérisé en ce que** la sortie, le signal (Clk_En₁, Clk_En₂) de validation d'horloge de chaque automate (12₁, 12₂) fini est connecté par l'intermédiaire d'un premier moyen (20₁, 20₂) de synchroniseur à double verrou à une entrée (Other ClkEn₁, Other ClkEn₂) de l'autre automate (12₂, 12₁) fini, dans lequel chaque automate (12₁, 12₂) fini est apte à contrôler l'état de l'autre signal (ClkEn₂, ClkEn₁) de validation d'horloge par l'intermédiaire de l'entrée (Other ClkEn₁, Other ClkEn₂).

4. Moyen (10) numérique de commutation d'horloge suivant l'une quelconque des revendications 1 à 3, **caractérisé en ce que** chaque automate (12₁, 12₂) fini est relié à un deuxième moyen (22₁, 22₂) de synchroniseur à double verrou, dans lequel le signal (Select) d'entrée passe par le deuxième moyen (22₁, 22₂) de synchroniseur à double verrou.

5. Moyen (10) numérique de commutation d'horloge suivant la revendication 4, lorsqu'elle dépend de la revendication 3, **caractérisé en ce que** la première source (Clk_A) d'horloge est reliée aux premier et deuxième moyens (20₁, 22₁) de synchroniseur à double verrou reliés au premier automate (12₁) fini et les commande, et **en ce que** la deuxième source (Clk_B) d'horloge est reliée aux premier et deuxième moyens (20₂, 22₂) de synchroniseur à double verrou reliés au deuxième automate (12₂) fini et les commande.

6. Moyen (10) numérique de commutation d'horloge suivant l'une quelconque des revendications 1 à 5, **caractérisé en ce que** l'automate (12₁, 12₂) fini peut fonctionner pour invalider la source (Clk_A, Clk_B) d'horloge active avant que l'autre automate (12₂, 12₁) vérifie la présence de sa source (Clk_B, Clk_A) d'horloge.

7. Moyen (10) numérique de commutation d'horloge suivant l'une quelconque des revendications 1 à 5, **caractérisé en ce que** l'automate (12₂, 12₁) fini associé à la source (Clk_B, Clk_A) d'horloge qui n'est pas active peut fonctionner pour vérifier la présence de sa source (Clk_B, Clk_A) d'horloge avant que l'autre automate (12₁, 12₂) fini invalide la source (Clk_A, Clk_B) d'horloge active.

8. Moyen (10) numérique de commutation d'horloge suivant l'une quelconque des revendications 1 à 6, **caractérisé en ce que** le moyen (10) numérique de commutation d'horloge comprend aussi une deuxième porte OU (24) reliée à une sortie d'erreur (Erreur₁, Erreur₂) de chaque automate (12₁, 12₂) fini.

9. Moyen (10) numérique de commutation d'horloge suivant la revendication 8, **caractérisé en ce que**, si le moyen (14₁, 14₂) de comptage a décrémenté la variable (Cnt₁, Cnt₂) jusqu'à zéro, l'automate (12₁, 12₂) fini présentement dans l'état CHECK peut fonctionner pour entrer un état ERROR, l'automate (12₁, 12₂) fini pouvant fonctionner pour revalider la source (Clk_A, Clk_B) d'horloge active, qui sera passée à la sortie (Clk_Out) d'horloge, et pour envoyer un signal d'erreur à la deuxième porte OU (24).

10. Moyen (10) numérique de commutation d'horloge suivant la revendication 7, **caractérisé en ce que** chaque automate (12₁, 12₂) fini comprend aussi une sortie (S_{w}OK₁, S_{w}OK₂) et une entrée (Other S_{w}OK₁, Other S_{w}OK₂), dans lequel la sortie (S_{w}OK₁, S_{w}OK₂) de chaque automate (12₁, 12₂) fini est reliée par l'intermédiaire d'un troisième moyen (26₁, 26₂) de synchroniseur à double verrou à l'entrée (Other S_{w}OK₁, Other S_{w}OK₂) de l'autre automate (12₂, 12₁) fini.

11. Moyen (10) numérique de commutation d'horloge suivant la revendication 10, **caractérisé en ce que** la première source (Clk_A) d'horloge est reliée au troisième moyen (26₁) de synchroniseur à double verrou relié au premier automate (12₁) fini et peut fonctionner pour commander ce moyen et **en ce que** la deuxième source (Clk_B) d'horloge est reliée au troisième moyen (26₂) de synchroniseur à double verrou relié au deuxième automate (12₂) fini et peut fonctionner pour commander ce moyen.

12. Moyen (10) numérique de commutation d'horloge suivant la revendication 11, **caractérisé en ce que**, si l'automate (12₁, 12₂) fini a un signal (ClkEn₁, ClkEn₂) de validation d'horloge qui est active et si le signal (Select) d'entrée indique la mise hors circuit de la source (Clk_A, Clk_B) d'horloge active, l'automate (12₁, 12₂) fini peut fonctionner pour entrer dans un état CHECK, dans lequel la source (Clk_A, Clk_B) d'horloge active est invalidée, si l'autre automate (12₂, 12₁) fini a sa sortie (S_{w}OK₂, S_{w}OK₁) active avant que le moyen (14₁, 14₂) de comptage ait décrémenté la variable (Cnt₁, Cnt₂) jusqu'à zéro, et si l'autre automate (12₂, 12₁) fini n'a pas sa sortie (S_{w}OK₂, S_{w}OK₁) active avant que le moyen (14₁, 14₂) de comptage ait décrémenté la variable (Cnt₁, Cnt₂) jusqu'à zéro, l'automate (12₁, 12₂) fini peut fonctionner pour entrer dans l'état ERROR et envoyer le signal d'erreur à la deuxième porte OU (24).

13. Moyen (10) numérique de commutation d'horloge suivant l'une quelconque des revendications 10 à 12, **caractérisé en ce que**, si l'automate (12₁, 12₂) fini a son signal (ClkEn₁, ClkEn₂) de validation d'horloge inactif et si le signal (Select) d'entrée indique la mise en circuit de sa source (Clk_A, Clk_B) d'horloge, l'automate (12₁, 12₂) fini peut fonctionner pour entrer dans un état WAIT et sa sortie (S_{w}OK₁, S_{w}OK₂) peut fonctionner pour devenir active, et lorsque l'autre automate (12₂, 12₁) fini a mis hors circuit sa source (Clk_B, Clk_A) d'horloge, l'autre source (Clk_A, Clk_B) d'horloge peut fonctionner pour être active et passer à la sortie (Clk_Out) d'horloge.

14. Procédé de commutation sans impasse de la source de l'horloge numérique d'un circuit intégré à l'aide d'une première et deuxième sources (Clk_A, Clk_B) d'horloge, la première source (Clk_A) d'horloge étant active et la deuxième source (Clk_B) d'horloge étant inactive, le procédé comprenant les stades dans lesquels :
- on initialise une variable (Cnt₁) jusqu'à une constante (Nfail₁) lorsque la mise hors circuit de la source (Clk_A) d'horloge active est indiquée ;
- on décrémente la variable (Cnt₁) à chaque cycle d'horloge ;
- on effectue la commutation de la source (Clk_A) d'horloge active, si la présence de la source (Clk_B) d'horloge inactive est vérifiée, avant que la variable (Cnt₁) atteigne zéro ; et
- en revanche, on n'effectue pas la commutation de la source (Clk_A) d'horloge active, si la variable (Cnt₁) se décrémente jusqu'à zéro,
**caractérisé en ce que** le procédé comprend aussi le stade dans lequel :
- on vérifie la source de la source (Clk_B) d'horloge inactive avant d'invalider la source (Clk_A) d'horloge active.

15. Procédé de commutation sans impasse de la source de l'horloge numérique suivant la revendication 14, **caractérisé en ce que** le procédé comprend aussi les stades dans lesquels :
- on envoie une indication d'erreur, si la variable (Cnt₁) s'est décrémentée jusqu'à zéro.

16. Procédé de commutation sans impasse de la source de l'horloge numérique suivant la revendication 14 ou 15, **caractérisé en ce qu'**on effectue le procédé à l'aide d'un moyen (10) numérique de commutation de l'horloge, comprenant un premier automate (12₁) fini associé à la première source (Clk_A) d'horloge et un deuxième automate (12₂) fini associé à la deuxième source (Clk_B) d'horloge, chaque automate (12₁, 12₂) fini ayant un signal (Select) d'entrée pouvant fonctionner pour commander la source (Clk_A, Clk_B) d'horloge qui doit être active et passer à une sortie (Clk_Out) du moyen (10) numérique de commutation d'horloge, chaque automate (12₁, 12₂) fini comprenant un moyen (14₁, 14₂) de comptage avec une variable (Cnt₁, Cnt₂), dans lequel le procédé comprend aussi le stade dans lequel :
- on entre dans un état CHECK avec l'automate (12₁) fini associé à la source (Clk_A) d'horloge active lorsque le signal (Select) d'entrée indique la mise hors circuit de la source (Clk_A) d'horloge active.

17. Procédé de commutation sans impasse de la source de l'horloge numérique suivant la revendication 16, **caractérisé en ce que** chaque automate (12₁, 12₂) fini a une sortie, un signal (ClkEn₁, ClkEn₂) de validation d'horloge qui est relié par l'intermédiaire d'un premier moyen (20₁, 20₂) de synchronisateur à double verrou à une entrée (Other ClkEn₁, Other ClkEn₂) de l'autre automate (12₂, 12₁) fini, dans lequel le procédé comprend aussi le stade dans lequel :
- on utilise chaque automate (12₁, 12₂) fini pour contrôler l'état de l'autre signal (ClkEn₁, ClkEn₂) de validation d'horloge.

18. Procédé de commutation sans impasse de la source de l'horloge numérique suivant la revendication 16 ou 17, lorsqu'elle dépend de la revendication 16, **caractérisé en ce que** chaque automate (12₁, 12₂) fini comprend aussi une sortie (S_{w}OK₁, S_{w}OK₂) et une entrée (Other S_{w}OK₁, Other S_{w}OK₂), dans lequel le procédé comprend aussi les stades dans lesquels :
- on entre dans un état CHECK avec l'automate (12₁, 12₂) fini, si l'automate (12₁, 12₂) fini a son signal ClkEn₁, ClkEn₂) de validation d'horloge actif et si le signal (Select) d'entrée indique la mise hors circuit de la source (Clk_A, Clk_B) d'horloge active ;
- on invalide la source (Clk_A, Clk_B) d'horloge active, si l'autre automate (12₂, 12₁) fini a sa sortie (S_{w}OK₂, S_{w}OK₁) active avant que les moyens (14₁, 14₂) de comptage ait décrémenté la variable (Cnt₁, Cnt₂) jusqu'à zéro ; et
- si l'autre automate (12₂, 12₁) fini n'a pas sa sortie (S_{w}OK₂, S_{w}OK₁) active avant que les moyens (14₁, 14₂) de comptage ait décrémenté la variable (Cnt₁, Cnt₂) jusqu'à zéro,
- on entre dans l'état ERROR avec l'automate (12₁, 12₂) fini ; et
- on envoie le signal d'erreur.

19. Procédé de commutation sans impasse de la source de l'horloge numérique suivant la revendication 16 ou 17, **caractérisé en ce que** le procédé comprend aussi les stades dans lesquels:
- si l'automate (12₁, 12₂) fini a son signal (ClkEn₁, ClkEn₂) de validation d'horloge inactif et si le signal (Select) d'entrée indique la mise en circuit de sa source (Clk_A, Clk_B) d'horloge, on entre dans un état WAIT avec l'automate (12₁, 12₂) fini et on met sa sortie (S_{w}OK₁, S_{w}OK₁) à actif ; et
- lorsque l'autre automate (12₂, 12₁) fini a mis hors circuit sa source (Clk_B, Clk_A) d'horloge, on active l'autre source (Clk_A, Clk_B) d'horloge, et on la passe à la sortie (Clk_Out) d'horloge.

20. Au moins un produit (102₁, ..., 102ₙ) de programme informatique pour la commutation sans impasse de la source de l'horloge numérique d'un circuit intégré, ce ou ces produits (102₁, ..., 102ₙ) de programme informatique étant chargeable directement dans la mémoire interne d'au moins un ordinateur (100₁, ..., 100ₙ) numérique, comprenant des parties de code logiciel pour effectuer les stades de la revendication 14, lorsque le au moins un produit (102₁, ..., 102ₙ) passe sur le au moins un ordinateur (100₁, ..., 100ₙ).
